# EUROPÄISCHE PATENTSCHRIFT

(11) **EP 3 563 168 B1**
(45) Veröffentlichungstag und Bekanntmachung des Hinweises auf die Patenterteilung: **24.11.2021**
(21) Anmeldenummer: 17825550.1
(22) Anmeldetag: 28.12.2017
(51) Int. Cl.: G01S 7/40

(54) **VERFAHREN UND SYSTEM ZUR SIMULATIONSGESTÜTZTEN BESTIMMUNG VON ECHOPUNKTEN SOWIE VERFAHREN ZUR EMULATION UND EMULATIONSVORRICHTUNG**
METHOD AND SYSTEM FOR SIMULATION-ASSISTED DETERMINATION OF ECHO POINTS, AND EMULATION METHOD AND EMULATION APPARATUS
PROCÉDÉ ET SYSTÈME DE DÉTERMINATION ÉTABLIE PAR SIMULATION DE POINTS D'ÉCHO ET PROCÉDÉ D'ÉMULATION ET DISPOSITIF D'ÉMULATION

(30) Priorität: 29.12.2016 AT 511882016
(43) Veröffentlichungstag der Anmeldung: 06.11.2019
(73) Patentinhaber: AVL List GmbH, 8020 Graz (AT)
(72) Erfinder: MAIER, Franz Michael, 8047 Graz (AT)
(74) Vertreter: Hahner, Ralph
(86) Internationale Anmeldenummer: PCT/EP2017/084681
(87) Internationale Veröffentlichungsnummer: WO 2018/122282

(56) Entgegenhaltungen:
- DE-A1-102014 017 831
- DE-A1-102014 118 622
- DE-A1-102014 118 625

## Beschreibung

Die vorliegende Erfindung betrifft ein Verfahren und ein System zur simulationsgestützten Bestimmung eines Ist-Echopunkts eines Objekts sowie ein Verfahren und eine Emulationsvorrichtung zur Emulation eines Ortungsziels.

Zur Steuerung von Fahrerassistenzsystemen, insbesondere hochautomatisch bzw. autonom fahrenden Fahrzeugen, werden unter anderem Daten einer Mehrzahl von Sensoren verarbeitet, anhand deren Objekte, etwa andere Fahrzeuge, Fußgänger, Gebäude etc., erkannt und in Beziehung gesetzt werden können. Um solche Systeme abzusichern und damit eine hohe Verkehrssicherheit zu gewährleisten, werden in der Regel Testfahrten durchgeführt. Dabei kann eine Reduzierung des Testaufwands erreicht werden, indem Hardware-in-the-Loop (HiL)-Testverfahren eingesetzt werden, wobei die entsprechenden Systeme über Ihre Ein- und Ausgänge mit einem HiL-Simulator verbunden werden. Dadurch lassen sich diese Systeme einfach in einer simulierten Umgebung, d.h. einer virtuellen Welt, testen. Ein solches System ist beispielsweise in der DE102014118622 offenbart.

Damit diese Tests die Wirklichkeit besonders zuverlässig wiedergeben, wird angestrebt, die Umgebung im Wesentlichen in Echtzeit zu simulieren. Eine besondere Herausforderung ist es dabei, Radarsensoren in ein solches HiL-Testverfahren einzubinden, da hierzu die Ausbreitung, d.h. die Transmission und Reflexion, von elektromagnetischen Wellen in der virtuellen Welt im Allgemeinen recht aufwändig, d.h. rechenintensiv, nachgebildet werden muss.

Es ist eine Aufgabe der Erfindung, die Bestimmung von simulierten Echopunkten zu verbessern.

Diese Aufgabe wird durch ein Verfahren und ein System zur Echopunktbestimmung sowie ein Verfahren und eine Emulationsvorrichtung zur Emulation eines Ortungsziels nach den unabhängigen Ansprüchen gelöst. Vorteilhafte Ausgestaltungen der Erfindung werden in den abhängigen Ansprüchen beansprucht.

Ein erster Aspekt der Erfindung betrifft ein Verfahren zur simulationsgestützten Bestimmung wenigstens eines Ist-Echopunkts eines Objekts, wobei das Verfahren folgende Arbeitsschritteschritte aufweist: Berechnen eines prädizierten Objektreferenzpunkts des Objekts und eines prädizierten Sensoreinrichtungsreferenzpunkts einer, insbesondere radarbasierten, Sensoreinrichtung auf der Grundlage eines Ist-Objektreferenzpunkts und eines Ist-Sensoreinrichtungsreferenzpunkts; Bestimmen eines prädizierten Echopunkts des Objekts auf der Grundlage einer Abstrahlungscharakteristik der Sensoreinrichtung, dem prädizierten Objektreferenzpunkt und dem prädizierten Sensoreinrichtungsreferenzpunkt; Berechnen einer prädizierten, insbesondere räumlichen, Relativbeziehung zwischen dem prädizierten Echopunkt und dem prädizierten Objektreferenzpunkt; Berechnen, insbesondere wenigstens im Wesentlichen in Echtzeit, eines aktualisierten Ist-Objektreferenzpunkts; Bestimmen, insbesondere wenigstens im Wesentlichen in Echtzeit, eines simulierten Ist-Echopunkts des Objekts auf der Grundlage der prädizierten Relativbeziehung und dem aktualisierten Ist-Objektreferenzpunkt; und Ausgeben des simulierten Ist-Echopunkts.

Ein Echopunkt im Sinne der Erfindung gibt insbesondere den Punkt an, an dem ein Signal, insbesondere elektromagnetische Wellen, etwa ein Radarsignal, von einem Objekt reflektiert werden. Vorzugsweise werden in einem Echopunkt die Reflexionen von Signalen an dem Objekt, insbesondere an mehreren Oberflächen des Objekts, zusammengefasst und damit eine Idealisierung der Realität erreicht. Insbesondere kann ein Echopunkt immer einem Objektreferenzpunkt zugeordnet werden, d.h. es kann ein Abstandsvektor berechnet werden, der ausgehend von dem Objektreferenzpunkt in Richtung des Echopunkts weist.

Unter einer Prädiktion im Sinne der Erfindung ist insbesondere die Vorhersage der Weiterentwicklung, insbesondere die Interpolation, etwa durch Simulation und/oder Modellbildung, einer Größe, insbesondere von Punkten bzw. Koordinaten, etwa Referenzpunkten eines Objekts, zu verstehen. Solche ein Referenzpunkt kann etwa ein Schwerpunkt sein.

Ein Signal im Sinne der Erfindung ordnet einer messbaren physikalischen Größe wie z. B. einer elektrischen Spannung, einem Schalldruck oder einer Feldstärke eine Information zu. Diese Information kann aus der Messung eines physikalischen Prozesses stammen, beispielsweise eine Reflektion an einem Echoziel. Die Information kann einem Signal auch durch ein technisches Modulationsverfahren aufgeprägt werden, um durch ein Signal beliebige Informationen an eine geeignete Empfangseinrichtung zu übertragen. Im Allgemeinen ändern Signale ihren Betrag als Funktion der Zeit und einer weiteren informationstragenden Größe. Vorzugsweise handelt es sich erfindungsgemäß um ein reales Signal, etwa elektromagnetische Wellen, welches, insbesondere von einer Antenne, erzeugt und empfangen werden kann.

Die Erfindung basiert insbesondere auf der Erkenntnis, dass eine Berechnung eines Echopunkts eines simulierten Objekts, etwa durch ein Strahlverfolgungsverfahren (Raytracing), derart für eine vorhergesagte simulierte Situation in der Zukunft durchgeführt werden kann, dass der vorausberechnete Echopunkt der später eingetretenen Situation im Wesentlichen ohne Zeitverzögerung, insbesondere im Wesentlichen in Echtzeit, zugeordnet werden kann. Wird die Simulation entsprechend in Echtzeit ausgeführt, können dadurch zusätzlich zu Ist-Objektreferenzpunkten auch Ist-Echopunkte einzelner Simulationszeitschritte (frames) in Echtzeit ausgegeben werden. In anderen Worten kann der Echopunkt eines simulierten Objekts für eine vorausbestimmte Situation, etwa einen prädizierten Objektreferenzpunkt, berechnet werden, die sich aus einer aktuellen Situation, etwa einem Ist-Objektreferenzpunkt entwickelt. Vorzugsweise wird dieser deshalb als prädiziert bezeichnete Echopunkt nach seiner Berechnung dann der tatsächlichen Situation, etwa dem aktuellen Ist-Objektreferenzpunkt, zugeordnet.

Die Zuordnung des prädizierten Echopunkts zum aktuellen Ist-Objektreferenzpunkt wird bevorzugt anhand einer prädizierten Relativbeziehung zwischen dem prädizierten Echopunkt und dem prädizierten Objektreferenzpunkt durchgeführt. Vorzugsweise gibt die prädizierte Relativbeziehung den Abstand und/oder die Orientierung zwischen dem prädizierten Echopunkt und dem prädizierten Objektreferenzpunkt, insbesondere durch einen Abstandsvektor, an.

Stimmt die vorhergesagte Entwicklung des Objektreferenzpunkts mit der tatsächlichen Entwicklung überein, entspricht der prädizierte Echopunkt des simulierten Objekts auch dem tatsächlichen Echopunkt. Weicht die vorhergesagte Entwicklung des Objektreferenzpunkts dagegen von der tatsächlichen Entwicklung ab, kann, je nach Situation, eine kleine Abweichung des prädizierten Echopunkts vom tatsächlichen Echopunkt auftreten. Insbesondere betrifft diese Abweichung die prädizierte Relativbeziehung, so dass etwa der Abstand und/oder die Orientierung von dem prädizierten Echopunkt zu dem aktuellen Ist-Objektreferenzpunkt nicht mit dem tatsächlichen Abstand und/oder der tatsächlichen Orientierung übereinstimmt. Diese Abweichung ist jedoch gering und daher, insbesondere im Rahmen eines HiL-Testverfahrens, ohne nachteilige Auswirkungen zu vernachlässigen.

Insbesondere tritt diese Abweichung, wie bereits erwähnt, nur situativ auf, beispielsweise nur dann, wenn sich die Bewegungsrichtung des Objektreferenzpunkts ändert. Bewegt sich der Objektreferenzpunkt dagegen auf den Sensoreinrichtungsreferenzpunkt zu, beispielsweise bei simulierten, hintereinander fahrenden Fahrzeugen oder Gegenverkehr, spielt es keine Rolle für die Relativbeziehung von Echopunkt und Objektreferenzpunkt, in welcher Entfernung sich Objektreferenzpunkt und Sensoreinrichtungsreferenzpunkt tatsächlich befinden. Dadurch wird in diesem Fall auch bei falscher Prädiktion des Objektreferenzpunkts ein Ist-Echopunkt des Ist-Objektreferenzpunkts fehlerfrei bestimmt.

Vorzugsweise wird die Abweichung zwischen dem prädizierten Echopunkt des simulierten Objekts und dem tatsächlichen Echopunkt abgeschätzt und/oder korrigiert. Dazu kann etwa die Abweichung zwischen der Orientierung des prädizierten Echopunkts zu dem prädizierten Objektreferenzpunkt und der Orientierung des prädizierten Echopunkt zu dem aktuellen Ist-Objektreferenzpunkt erfasst werden, etwa durch einen Abgleich der jeweiligen Relativbeziehungen, und daraus ein entsprechender Korrekturfaktor zur Korrektur des prädizierten Echopunkts berechnet werden.

Vorzugsweise ist der simulierte Ist-Echopunkt nicht vom Prädiktionsalgorithmus abhängig und wird in Echtzeit aktualisiert. Bevorzugt ist auch ein Dopplerfrequenzhub in Echtzeit aktualisierbar.

Insgesamt ermöglicht die Erfindung durch Bestimmen eines prädizierten Echopunkt die zuverlässige Bestimmung eines Ist-Echopunkts, insbesondere im Wesentlichen in Echtzeit.

Vorzugsweise wird das Berechnen des prädizierten Objektreferenzpunkt des Objekts und des prädizierten Sensoreinrichtungsreferenzpunkts einer Sensoreinrichtung auf der Grundlage eines Ist-Objektreferenzpunkts und eines Ist-Sensoreinrichtungsreferenzpunkts mit Daten aus einer Verkehrssimulation, insbesondere CarMaker® und/oder VIRES ®, durchgeführt. Vorzugsweise liefert die Verkehrssimulation dabei die Ist-Daten, eine weitere Simulation dient zur Prädiktion.

Vorzugsweise wird das Bestimmen des prädizierten Echopunkts des Objekts auf der Grundlage einer Abstrahlungscharakteristik der Sensoreinrichtung, dem prädizierten Objektreferenzpunkt und dem prädizierten Sensoreinrichtungsreferenzpunkt mittels eines Strahlverfolgungsverfahrens (Raytracing), insbesondere OptiX®, durchgeführt.

Vorzugsweise kann das Verfahren auch eingesetzt werden, um Ist-Echopunkte von virtuellen, d.h. von einer simulierten Sensoreinrichtung emittierten, Signalen zu bestimmen. Insbesondere kann das Verfahren auch genutzt werden, um simulierte Sensoreinrichtungen zu testen, indem die Ausbreitung der virtuellen, insbesondere simulierten, Signale unter Einbeziehung prädizierter Objektreferenzpunkte ebenfalls simulierter Objekte und eines prädizierten Sensoreinrichtungsreferenzpunkts der Sensoreinrichtung, insbesondere in einer simulierten Verkehrssituation, berechnet, insbesondere modelliert wird, etwa mittels eines Strahlverfolgungsverfahrens.

In einer bevorzugten Ausführung weist das erfindungsgemäße Verfahren den weiteren, folgenden Arbeitsschritt auf: Berechnen, insbesondere wenigstens im Wesentlichen in Echtzeit, eines aktualisierten Ist-Sensoreinrichtungsreferenzpunkts; wobei der Ist-Echopunkt des Weiteren auf der Grundlage des aktualisierten Ist-Sensoreinrichtungsreferenzpunkts der Sensoreinrichtung bestimmt wird. Dadurch wird berücksichtigt, dass die, insbesondere radarbasierte, Sensoreinrichtung nicht stationär ist, sondern sich insbesondere linear oder beschleunigt fortbewegen kann. Dies spielt etwa eine Rolle, wenn das Objekt ein zumindest im Wesentlichen unbewegtes Objekt, beispielsweise ein Fußgänger oder ein Gebäude, ist, relativ zu dem die Sensoreinrichtung die Bewegungsrichtung oder Geschwindigkeit ändert. Insbesondere kann dadurch ein Dopplerhub eines Signals, welches an einem simulierten Objekt, insbesondere in dessen Echopunkt, reflektiert würde, besonders zuverlässig berücksichtigt werden.

In einer weiteren bevorzugten Ausführung werden die Arbeitsschritte des erfindungsgemäßen Verfahrens periodisch wiederholt. Vorzugsweise ist der Prädiktionshorizont beim Berechnen des prädizierten Objektreferenzpunkts und des prädizierten Sensoreinrichtungsreferenzpunkts so weit, wie zum Bestimmen des prädizierten Echopunkts des Objekts benötigt wird. Vorzugsweise beträgt der Prädiktionshorizont dabei weniger als eine Sekunde, bevorzugt weniger als etwa 500 ms, besonders bevorzugt weniger als etwa 200 ms, insbesondere wenigstens etwa 100 ms. Dadurch wird sichergestellt, dass der prädizierte Echopunkt zuverlässig einem tatsächlichen Echopunkt des aktuellen Ist-Objektreferenzpunkts entspricht.

Vorzugsweise wird dabei für Simulationszeitschritte, die innerhalb des Prädiktionshorizonts liegen, die Bestimmung eines simulierten Ist-Echopunkts auf der Grundlage einer vorangehend prädizierten Relativbeziehung zwischen einem vorangehend prädizierten Echopunkt und einem vorangehend prädizierten Objektreferenzpunkt einerseits und dem aktualisierten Ist-Objektreferenzpunkts des aktuellen Simulationszeitschritts andererseits bestimmt. In anderen Worten werden die Ist-Echopunkte bevorzugt so lange basierend auf nicht-aktuellen prädizierten Relativbeziehung bestimmt, bis eine aktuelle prädizierte Relativbeziehung berechnet wurde.

In einer weiteren bevorzugten Ausführung werden die Arbeitsschritte des Verfahrens periodisch wiederholt. Vorzugsweise wird das Bestimmen eines simulierten Ist-Echopunkts nach etwa 10 ms, bevorzugt nach etwa 5 ms, bevorzugt nach etwa 2 ms, insbesondere nach etwa 1 ms wiederholt. Vorzugsweise kann der Ist-Echopunkt dabei auch basierend auf nicht-aktuellen prädizierten Relativbeziehung zwischen einem vorangehend bestimmten prädizierten Echopunkt und einem vorangehend berechneten prädizierten Objektreferenzpunkt bestimmt werden. Dadurch wird gewährleistet, dass der simulierte Ist-Echopunkt zumindest im Wesentlichen in Echtzeit bestimmt wird und somit insbesondere HiL-Testverfahren zuverlässig durchgeführt werden können.

In einer weiteren bevorzugten Ausführung werden bei der Bestimmung des prädizierten Echopunkts des Weiteren eine Anordnung des Objekts, insbesondere dessen Orientierung, relativ zu der Sensoreinrichtung und/oder Objektabmessungen, insbesondere die Form des Objekts, berücksichtigt. Dadurch wird gewährleistet, dass der prädizierte Echopunkt die Reflexion eines Signals an dem Objekt, insbesondere zurück in Richtung der Sensoreinrichtung, besonders zuverlässig, insbesondere wirklichkeitsgetreu, wiedergibt.

Ein zweiter Aspekt der Erfindung betrifft ein Verfahren zur Simulation eines Ortungsziels, aufweisend die folgenden Arbeitsschritte: Prüfen, ob ein Signal, welches von einer, insbesondere radarbasierten, Sensoreinrichtung ausgesandt wird, empfangen wird; Bestimmen und Ausgeben wenigstens eines simulierten Ist-Echopunkts gemäß dem ersten Aspekt der Erfindung, insbesondere, wenn ein Signal empfangen wird; Modulieren des empfangenen Signals auf der Grundlage des wenigstens einen simulierten Ist-Echopunkts; und Aussenden des modulierten Signals an die Sensoreinrichtung.

Aussenden im Sinne der Erfindung bedeutet insbesondere Zurücksenden. Das Signal wird vorzugsweise lediglich moduliert und zurückgesendet.

In einer bevorzugten Ausführung wirkt das ausgesandte modulierte Signal, insbesondere unmittelbar, auf einen Aufnehmer, insbesondere einen Messgrößenaufnehmer, vorzugsweise im Sinne der DIN 1319-1, der Sensoreinrichtung ein. Dadurch wird sichergestellt, dass das ausgesandte modulierte Signal nicht gestört, insbesondere verfälscht, wird, so dass die Sensoreinrichtung ein oder mehrere simulierte Objekte, insbesondere eine simulierte Umgebung, zuverlässig erfassen kann.

Ein dritter Aspekt der Erfindung betrifft ein System zur simulationsgestützten Bestimmung wenigstens eines Ist-Echopunkts eines Objekts, aufweisend ein Mittel zum Berechnen eines prädizierten Objektreferenzpunkts des Objekts und eines prädizierten Sensoreinrichtungsreferenzpunkts einer, insbesondere radarbasierten, Sensoreinrichtung auf der Grundlage eines Ist-Objektreferenzpunkts und eines Ist-Sensoreinrichtungsreferenzpunkts sowie ein Mittel zum Bestimmen eines prädizierten Echopunkts des Objekts auf der Grundlage einer Abstrahlungscharakteristik der Sensoreinrichtung, dem prädizierten Objektreferenzpunkt und dem prädizierten Sensoreinrichtungsreferenzpunkt. Zudem weist das System ein Mittel zum Berechnen einer prädizierten, insbesondere räumlichen, Relativbeziehung zwischen dem prädizierten Echopunkt und dem prädizierten Objektreferenzpunkt und ein Mittel zum Berechnen, insbesondere wenigstens im Wesentlichen in Echtzeit, eines aktualisierten Ist-Objektreferenzpunkts auf. Des Weiteren weist das System ein Mittel zum Bestimmen, insbesondere wenigstens im Wesentlichen in Echtzeit, eines simulierten Ist-Echopunkts des Objekts auf der Grundlage der prädizierten Relativbeziehung und dem aktualisierten Ist-Objektreferenzpunkt und ein Mittel zum Ausgeben des simulierten Ist-Echopunkts auf.

Vorzugsweise weist das System eine oder mehrere Recheneinheiten, insbesondere Hauptprozessoren (CPU) und/oder Grafikprozessoren (GPU) auf, die dazu eingerichtet sind, einen oder mehrere Arbeitsschritte des Verfahrens gemäß dem ersten Aspekt der Erfindung auszuführen. Bevorzugt werden die Recheneinheiten dabei von einer Steuerungseinheit gesteuert. Insbesondere ist die Steuerungseinheit dazu eingerichtet, den Prädiktionshorizont beim Berechnen eines prädizierten Objektreferenzpunkts und eines prädizierten Sensoreinrichtungsreferenzpunkts an die Zeitdauer, welche zum Bestimmen des prädizierten Echopunkt des Objekts notwendig ist, anzupassen.

In einer bevorzugten Ausführung ist das Mittel zum Berechnen eines prädizierten Objektreferenzpunktes und eines prädizierten Sensoreinrichtungsreferenzpunkts als Recheneinheit ausgebildet, welche dazu eingerichtet ist, eine Verkehrssimulation, insbesondere CarMaker® und/oder VIRES®, auszuführen und die Ergebnisse der Simulation, insbesondere Objektreferenzpunkte und Sensoreinrichtungsreferenzpunkte, in einem vorgegebenen zeitlichen Objekttakt, d.h. einer vorgegebenen zeitlichen Abfolge von Simulationszeitschritten, vorzugsweise schneller als etwa 10 ms, bevorzugt schneller als etwa 5 ms, insbesondere schneller als etwa 1 ms, auszugeben.

In einer weiteren bevorzugten Ausführung ist das Mittel zum Bestimmen eines prädizierten Echopunkts als Recheneinheit ausgebildet, welche dazu eingerichtet ist, ein Strahlverfolgungsverfahren, insbesondere OptiX®, auszuführen und die Ergebnisse der Simulation, insbesondere Echopunkte, in einem vorgegebenen zeitlichen Echotakt, vorzugsweise schneller als etwa 1 Sekunde, bevorzugt schneller als etwa 500 ms, bevorzugt der schneller als etwa 200 ms, insbesondere schneller als etwa 100 ms, auszugeben.

Vorzugsweise kann das System Ist-Echopunkte von simulierten Teilnehmern an einer beliebigen, insbesondere vorgegebenen, simulierten Verkehrssituation ausgeben.

Ein vierter Aspekt der Erfindung betrifft eine Emulationsvorrichtung zur Emulation eines Ortungsziels, mit einem Empfangsmodul, welches zum Empfangen eines von einer Sensoreinrichtung ausgesandten Signals, insbesondere Radarsignals, eingerichtet ist, sowie einem Rechenmodul, welches ein System gemäß dem dritten Aspekt der Erfindung umfasst. Zudem weist die Emulationsvorrichtung ein Modulationsmodul auf, welches eingerichtet ist, ein von dem Empfangsmodul empfangenes Signal auf der Grundlage des wenigstens einen simulierten Ist-Echopunkts zu modulieren, sowie ein Ansteuermodul, welches eingerichtet ist, ein Ansteuersignal für eine Antenne zu generieren, insbesondere wenigstens teilweise auf der Grundlage des wenigstens einen simulierten Ist-Echopunkts und/oder des modulierten Signals. Die Emulationsvorrichtung weist außerdem ein Sendemodul auf, welches zum Senden des modulierten Signals an die Sensoreinrichtung eingerichtet ist.

Unter einem Empfangsmodul im Sinne der Erfindung ist insbesondere eine Antenne zum Empfangen von elektromagnetischen Wellen zu verstehen. Vorzugsweise wandelt das Empfangsmodule ein durch die elektromagnetischen Wellen charakterisierte Signal in ein elektrisches, insbesondere analoges, Signal um, welches moduliert werden kann.

Vorzugsweise versieht/moduliert das Empfangsmodul ein empfangenes Signal mit den durch eine Simulation bestimmten Charakteristiken und sendet es dann derart verändert wieder zurück.

Vorzugsweise ist die Emulationsvorrichtung zumindest als Teil eines HiL-Testsystems ausgebildet, wobei die Sensoreinrichtung eine radarbasierte Sensorrichtung eines Fahrzeugs ist. Insbesondere ist die Emulationsvorrichtung zumindest als Teil eines Prüfstands für hochautomatisch fahrende Fahrzeuge ausgebildet.

In einer bevorzugten Ausführung ist das Sendemodul eingerichtet, insbesondere unmittelbar, auf einen Aufnehmer, insbesondere einen Messgrößenaufnehmer, vorzugsweise im Sinne der DIN 1319-1, der Sensoreinrichtung einzuwirken. Dadurch wird sichergestellt, dass das ausgesandte modulierte Signal nicht gestört, insbesondere verfälscht, wird, so dass die Sensoreinrichtung ein oder mehrere simulierte Objekte, insbesondere eine simulierte Umgebung, zuverlässig erfassen kann.

Die im Vorhergehenden ausgeführten Merkmale und Vorteile in Bezug auf den ersten Aspekt der Erfindung gelten, wo technisch sinnvoll, auch für den zweiten, dritten und vierten Aspekt der Erfindung entsprechend sowie umgekehrt.

Diese und weitere Merkmale und Vorteile gehen außer aus den Ansprüchen und aus der Beschreibung auch aus den Zeichnungen hervor, wobei die einzelnen Merkmale jeweils für sich allein oder zu mehreren, in Form von Unterkombinationen bei einer Ausgestaltung der Erfindung verwirklicht sein können und eine vorteilhafte sowie für sich schutzfähige Ausführung darstellen können, für die ebenfalls Schutz beansprucht wird, sofern sie technisch sinnvoll ist.

Die Erfindung wird im Folgenden an Hand von nicht einschränkenden Ausführungsbeispielen, die in den Figuren dargestellt sind, näher erläutert. Darin zeigen wenigstens teilweise schematisch:
- Fig. 1: ein Ausführungsbeispiel eines erfindungsgemäßen Verfahrens;
- Fig. 2: ein erstes Ausführungsbeispiel eines erfindungsgemäßen Systems;
- Fig. 3: ein zweites Ausführungsbeispiel eines erfindungsgemäßen Systems;
- Fig. 4A-C: verschiedene Szenarien der Bestimmung eines Ist-Echopunkts eines simulierten Objekts; und
- Fig. 5: ein Ausführungsbeispiel einer erfindungsgemäßen Emulationsvorrichtung.

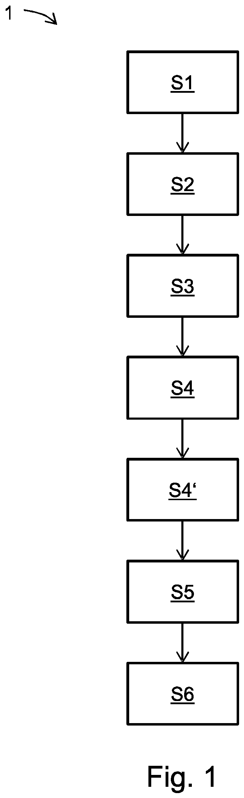

Figur 1 zeigt ein Ausführungsbeispiel eines erfindungsgemäßen Verfahrens 1.

In einem ersten Arbeitsschritt S1 wird basierend auf Koordinaten von Verkehrsteilnehmen und einer Sensoreinrichtung, die bevorzugt von einer Verkehrssimulation erzeugt werden, die Entwicklung einer, insbesondere vorgegebenen, Verkehrssituation vorausbestimmt, etwa durch Simulieren der verschiedenen Verkehrsteilnehmer und Sensoreinrichtung, insbesondere deren Kinematik. Dabei wird für jeden der Verkehrsteilnehmer ein prädizierter Objektreferenzpunkt berechnet. Zudem wird auch für eine Sensoreinrichtung, welche Signale, insbesondere reflektierte elektromagnetische Wellen, von den Verkehrsteilnehmern erfassen soll, ein prädizierter Sensoreinrichtungsreferenzpunkt berechnet.

In einem zweiten Arbeitsschritt S2 werden die Koordinaten von Punkten, an denen gemäß der simulierten Verkehrssituation von der Sensoreinrichtung emittierte Signale, insbesondere von jedem Verkehrsteilnehmer, reflektiert würden, bestimmt.

Dazu können auch die Signale, insbesondere Radarsignale, simuliert, insbesondere modelliert, d.h. virtuell nachgebildet, werden, etwa durch ein Strahlverfolgungsverfahren. In anderen Worten werden Signale, welche die Sensoreinrichtung zum Erfassen von Objekten in der Realität emittiert, nachgebildet und deren Ausbreitung in der virtuellen Umgebung der simulierten Verkehrssituation berechnet. Daraus ergeben sich insbesondere die Koordinaten der Reflexionspunkte eines jeden Objekts, sog. Echopunkte.

Vorzugsweise wird jedoch angenommen, dass sich die Sensoreinrichtung nicht bewegt bzw. dass sich das Objekt in einem Inertialsystem der Sensoreinrichtung bewegt. In diesem Inertialsystem ruht die Sensoreinrichtung und allein die Relativbewegung des Objekts in Bezug auf die Sensoreinrichtung wird berechnet.

Die Echopunkte hängen dabei von der Abstrahlungscharakteristik der Sensoreinrichtung, dem prädizierten Objektreferenzpunkt und dem prädizierten Sensoreinrichtungspunkt, d.h. insbesondere von den Koordinaten der Verkehrsteilnehmer und der Sensoreinrichtung, ab. Insbesondere können die Echopunkte auch von den Anordnungen, etwa Orientierungen, der Verkehrsteilnehmer zu der Sensoreinrichtung und/oder den Abmessungen der Verkehrsteilnehmer, insbesondere deren Formen, abhängen. Weil diese Koordinaten von in Arbeitsschritt S1 vorhergesagten Koordinaten von Objekten abhängen, werden sie als prädizierte Echopunkte bezeichnet. Vorzugsweise werden dabei mehrere zu erwartende Echopunkte in einem einzigen Echopunkt zusammengefasst.

Aus den prädizierten Echopunkten und dem prädizierten Objektreferenzpunkt können in einem dritten Arbeitsschritt S3, insbesondere räumliche, Relativbeziehungen zwischen den prädizierten Echopunkten und den prädizierten Objektreferenzpunkten berechnet werden. Eine Relativbeziehung ist etwa ein Abstand und/oder eine Orientierung, bevorzugt ein Abstandsvektor, der ausgehend von einem prädizierten Objektreferenzpunkt auf einen prädizierten Echopunkt gerichtet ist.

Für den Zeitpunkt, zu dem die Berechnung der Relativbeziehung abgeschlossen wird, können in einem vierten Arbeitsschritt S4 aktualisierte Koordinaten der Verkehrsteilnehmer, d.h. Objektreferenzpunkte, berechnet werden. Diese Berechnung wird bevorzugt zumindest im Wesentlichen in Echtzeit durchgeführt.

Dabei ist der Prädiktionshorizont, d.h. die Zeitdauer, für die die im ersten Arbeitsschritt S1 vorgegebene Verkehrssituation weiterentwickelt wird, bevorzugt derart gewählt, dass sie der Zeitdauer, welche zum Bestimmen der prädizierten Echopunkte benötigt wird, im Wesentlichen entspricht.

In einem zusätzlichen vierten Arbeitsschritt S4' werden aktualisierte Koordinaten der Sensoreinrichtung berechnet, die sich, analog zu den Verkehrsteilnehmern, innerhalb des Prädiktionshorizonts weiterbewegt.

In einem fünften Arbeitsschritt S5 werden simulierte Ist-Echopunkte bestimmt, indem die Relativbeziehungen den aktualisierten Koordinaten der Verkehrsteilnehmer und den aktualisierten Koordinaten der Sensoreinrichtung zugeordnet wird. In anderen Worten werden prädizierte Objektreferenzpunkte durch aktuelle ist-Objektreferenzpunkte ausgetauscht, so dass sich die Ausgangspunkte der Abstandsvektoren verschieben.

Die simulierten Ist-Echopunkte werden schließlich in einem sechsten Arbeitsschritt S6 ausgegeben.

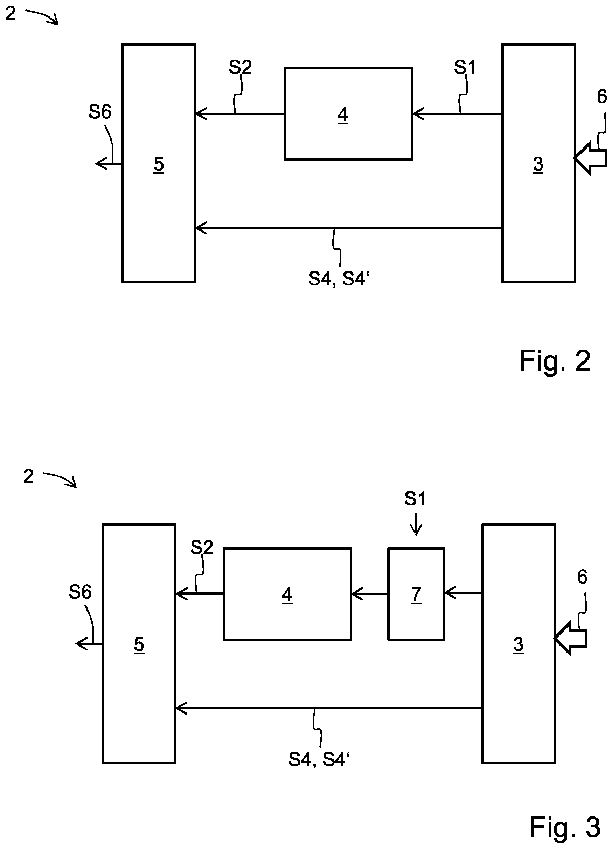

Figur 2 zeigt ein erstes Ausführungsbeispiel eines erfindungsgemäßen Systems 2 zur simulationsgestützten Bestimmung wenigstens eines Ist-Echopunkts mit einer Verkehrssimulation 3, einer Strahlverfolgungseinheit 4 und einer Berechnungseinheit 5.

Die Verkehrssimulation 3 weist eine Eingabe 6 auf, über welche die Verkehrssimulation 3 gesteuert werden kann. Durch die Eingabe 6 kann insbesondere eine zu simulierende Verkehrssituation eingegeben werden sowie ein Prädiktionshorizont, welche die Zeitdauer angibt, für welche die Verkehrssituation weiterentwickelt werden soll. Die Verkehrssituation ist insbesondere durch Ist-Objektreferenzpunkte und Ist-Sensoreinrichtungsreferenzpunkte charakterisiert.

Die Verkehrssimulation 3 gibt im Arbeitsschritt S1 einen prädizierten Objektreferenzpunkt und einen prädizierten Sensoreinrichtungsreferenzpunkt an die Strahlverfolgungseinheit 4 aus. Die prädizierten Referenzpunkte entsprechen etwa Koordinaten eines Verkehrsteilnehmers und der Sensoreinrichtung in der prädizierten Zukunft.

In der Strahlverfolgungseinheit 4 wird der prädizierte Referenzpunkt des Verkehrsteilnehmers und der Sensoreinrichtung verarbeitet, um einen prädizierten Echopunkt des Verkehrsteilnehmers zu bestimmen und an die Berechnungseinheit 5 auszugeben. Dieser Vorgang ist durch den Arbeitsschritt S2 angedeutet.

Dabei werden die Wege von durch die Sensoreinrichtung ausgesandten Signalen, etwa elektromagnetischen Wellen, nachgebildet, etwa berechnet, insbesondere deren Transmission bzw. Brechung und/oder Reflexion an Oberflächen der simulierten Verkehrsteilnehmer.

Die Berechnungseinheit 5 ist dazu eingerichtet, aus dem prädizierten Echopunkt und dem in Arbeitsschritt S1 berechneten prädizierten Objektreferenzpunkt eine prädizierte, insbesondere räumliche, Relativbeziehung zwischen dem prädizierten Echopunkt und dem prädizierten Objektreferenzpunkt zu berechnen. Dadurch ist die Lage, insbesondere der Abstand und/oder die Orientierung, des prädizierten Echopunkts relativ zu dem prädizierten Objektreferenzpunkt bekannt.

Wenn die Bestimmung des prädizierten Echopunkts und/oder der prädizierten Relativbeziehung im Wesentlichen abgeschlossen ist, berechnet die Verkehrssimulation 3 einen aktualisierten Ist-Objektreferenzpunkt. Zusätzlich kann die Verkehrssimulation 3 dabei auch einen aktualisierten Ist-Sensoreinrichtungsreferenzpunkt berechnen. Die aktualisierten Referenzpunkte werden an die Berechnungseinheit 5 ausgegeben. Dies ist durch die Arbeitsschritte S4, S4' angedeutet.

Die Berechnungseinheit 5 ist auch dazu eingerichtet, anhand der prädizierten Relativbeziehung, dem aktualisierten Ist-Objektreferenzpunkt und dem aktualisierten Ist-Sensor Einrichtungsreferenzpunkt einen simulierten Ist-Echopunkt des simulierten Verkehrsteilnehmers zu bestimmen, der in dem Arbeitsschritt S6 ausgegeben werden kann.

Figur 3 zeigt ein zweites Ausführungsbeispiel eines erfindungsgemäßen Systems 2 mit einer Verkehrssimulation 3, einer Strahlverfolgungseinheit 4, einer Berechnungseinheit 5 und einer Prädiktionseinheit 7.

Die Verkehrssimulation 3 gibt den berechneten Ist-Objektreferenzpunkt und den Ist-Sensoreinrichtungsreferenzpunkt an die Prädiktionseinheit 7 aus, welche dazu eingerichtet ist, auf der Grundlage des Ist-Objektreferenzpunkts und des Ist-Sensoreinrichtungsreferenzpunkts einen prädizierten Objektreferenzpunkt und einen prädizierten Sensoreinrichtungsreferenzpunkt zu berechnen. Zu diesem Zweck modelliert die Prädiktionseinheit 7 die Entwicklung der Ist-Referenzpunkte, etwa der Koordinaten von Verkehrsteilnehmern und Sensoren. Die Prädiktionseinheit 7 kann insbesondere als Recheneinheit ausgebildet sein, die eine Kalman-Filterung ausführt und/oder die Koordinaten mittels Recursive Least Squares-Prädiktion oder modellbasierter RLSQ bestimmt.

Anschließend gibt die Prädiktionseinheit 7 den prädizierten Objektreferenzpunkt und den prädizierten Sensoreinrichtungsreferenzpunkt an die Strahlverfolgungseinrichtung 4 aus.

Ansonsten entspricht dieses Ausführungsbeispiel dem in Figur 2 beschriebenen Ausführungsbeispiel, insbesondere bezüglich dessen möglichen Vorteilen.

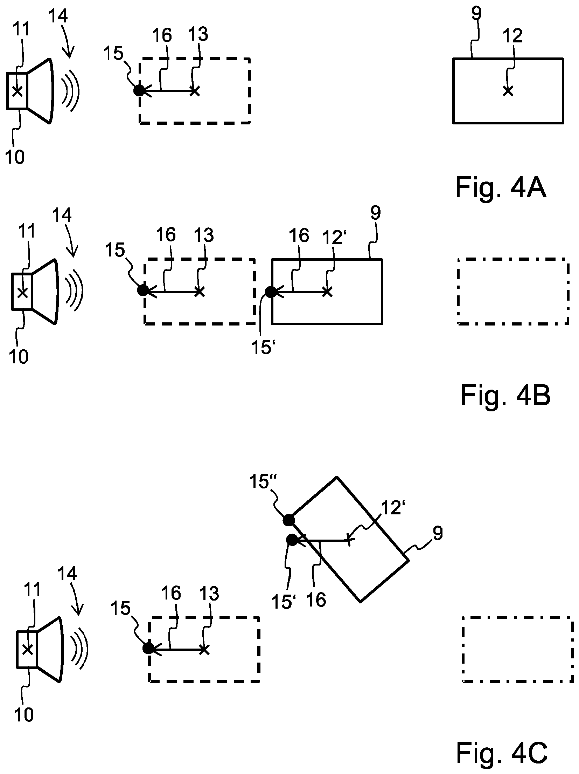

Die Figuren 4A-C zeigen verschiedene Szenarien der Bestimmung eines Ist-Echopunkts 8 eines simulierten Objekts 9.

In einer in Figur 4A gezeigten Ausgangsposition sind eine Sensoreinrichtung 10 an einem Ist-Sensoreinrichtungsreferenzpunkt 11 und ein simuliertes Objekt 9 an einem Ist-Objektreferenzpunkt 12 angeordnet. Eine Prädiktionseinheit (siehe Figur 3) prädiziert einen Objektreferenzpunkt 13 hinter einem vorgegebenen Prädiktionshorizont, d.h. nach Verstreichen einer vorgegebenen Zeitdauer.

Anhand einer Abstrahlcharakteristik 14 für ein durch die Sensorvorrichtung 10 abgestrahltes Signal, etwa elektromagnetische Wellen, dem prädizierten Objektreferenzpunkt 13 und einem prädizierten Sensoreinrichtungsreferenzpunkt (der im vorliegenden Beispiel aus Anschaulichkeitsgründen mit dem Ist-Sensoreinrichtungsreferenzpunkt übereinstimmt) wird ein prädizierter Echopunkt 15 des Objekts 9 bestimmt, welcher zumindest idealisiert wiedergibt, wie und/oder an welchen Koordinaten ein durch die Sensorvorrichtung 10 abgestrahltes Signal von dem Objekt 9 reflektiert würde.

Der prädizierte Echopunkt 15 liegt dabei an einer der Sensoreinrichtung 10 zugewandten Seite des Objekts 9.

Anhand des prädizierten Echopunkts 15 und des prädizierten Objektreferenzpunkts 13 kann eine prädizierte Relativbeziehung 16 zwischen dem prädizierten Echopunkt 15 und dem prädizierten Objektreferenzpunkt 13 berechnet werden. Im vorliegenden Beispiel ist die prädizierte Relativbeziehung 16 als Vektor dargestellt, welcher von dem prädizierten Objektreferenzpunkt 13 auf den prädizierten Echopunkt 15 weist.

Wenn ein nach dem Prädiktionshorizont aktualisierter Objektreferenzpunkt des simulierten Objekts 9, d.h. nachdem der prädizierte Echopunkt und/oder die prädizierte Relativbeziehung bestimmt wurde, mit dem prädizierten Objektreferenzpunkt 13 übereinstimmt, ist der prädizierte Echopunkt 15 der Ist-Echopunkt des Objekts 9.

In der Figur 4B ist eine erste Situation nach dem Prädiktionshorizont, d.h. nachdem der prädizierte Echopunkt und/oder die prädizierte Relativbeziehung bestimmt wurde, dargestellt.

Das simulierte Objekt 9 hat sich dabei auf die Sensoreinrichtung 10, insbesondere deren Referenzpunkt 11, zubewegt, wobei sein aktualisierter Ist-Objektreferenzpunkt 12' nicht mit dem prädizierten Objektreferenzpunkt 13 übereinstimmt. Die ursprüngliche Position des simulierten Objekts 9 ist dabei strichpunktiert angedeutet.

Da der Ist-Echopunkt 15' anhand der prädizierten Relativbeziehung 16 und dem aktualisierten ist-Objektreferenzpunkt 12' bestimmt wird, gibt der Ist-Echopunkt 15' die tatsächliche Position des Echopunkts des simulierten Objekts 9 wieder, obwohl eine Diskrepanz zwischen aktualisiertem Objektreferenzpunkt 12' und prädizierten Objektreferenzpunkt 13 besteht.

In der Figur 4C ist eine zweite Situation nach dem Prädiktionshorizont, d.h. nachdem der prädizierte Echopunkt und/oder die prädizierte Relativbeziehung bestimmt wurde, dargestellt.

Das simulierte Objekt 9 hat dabei seine Bewegungsrichtung geändert, d.h. es ist einer gekrümmten Wegstrecke gefolgt. Da die Position eines tatsächlichen Echopunkts 15" von der Form und/oder der Orientierung des Objekts 9 zur Sensoreinrichtung 10 abhängt, hat sich der tatsächliche Echopunkt 15"in diesem Beispiel auf eine der Sensoreinrichtung zu verziehen zugewandte Ecke des Objekts 9 verschoben. Die prädizierte Relativbeziehung 16, die zum Bestimmen des Ist-Echopunkts 15' herangezogen wird, weist daher nicht auf den tatsächlichen Echopunkt 15" des Objekts 9.

Vorzugsweise kann anhand der Abweichung der Orientierung des Objekts 9 an prädizierten Objektreferenzpunkt 13 und am aktualisierten Ist-Objektreferenzpunkt 12' eine Korrektur des Ist-Echopunkts 15' durchgeführt werden, etwa indem ein Korrekturfaktor für die Abweichung berechnet und in die Bestimmung des Ist-Echopunkts 15' mit einbezogen wird.

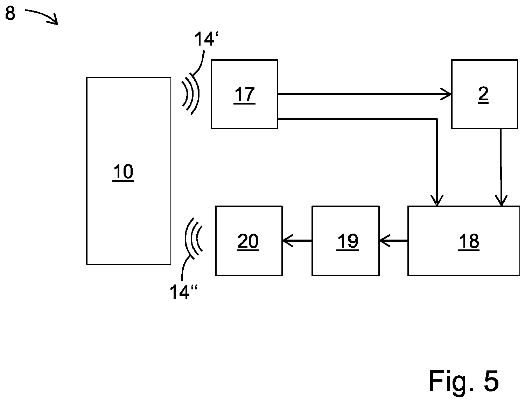

Figur 5 zeigt ein Ausführungsbeispiel einer erfindungsgemäßen Emulationsvorrichtung 8 zur Emulation eines Ortungsziels mit einem Empfangsmodul 17, einem System 2 zur simulationsgestützten Bestimmung wenigstens eines Ist-Echopunkts, eine Modulationsmodul 18, einem an Steuermodul 19 und einem Sendemodul 20.

Das Empfangsmodul 17, etwa eine Antenne, empfängt das von einer Sensorvorrichtung 10 ausgesandte reale Signal 14', insbesondere elektromagnetische Wellen, etwa ein Radarsignal.

Mittels der Simulation einer Verkehrssituation, in der etwa ein Fahrerassistenzsystemen eines die Sensorvorrichtung (10) aufweisenden Fahrzeugs getestet werden soll, und der virtuellen Strahlverfolgung der vom Empfangsmodul 17 empfangenen Signale 14' werden von dem System 2 Ist-Echopunkte bestimmt und an das Modulationsmodul 18 ausgegeben.

Das Modulationsmodul 18 moduliert das vom Empfangsmodul 17 empfangene Signal 14' gemäß der Ist-Echopunkte, insbesondere so dass ein moduliertes Signal 14" durch die vom System 2 simulierte Verkehrssituation charakterisiert ist, und gibt es an das Ansteuermodul 19 aus. Dieses steuert ein Sendemodul 20, etwa eine Antenne, in der Weise, insbesondere durch ein Ansteuersignal, dass von dem Sendemodul 20 das modulierte Signal 14" gesendet werden kann, welches schließlich von der Sensoreinrichtung 10 empfangen wird.

### Bezuaszeichenliste

- 1: Verfahren
- 2: System
- 3: Verkehrssimulation
- 4: Strahlverfolgungseinheit
- 5: Recheneinheit
- 6: Eingang
- 7: Prädiktionseinheit
- 8: Emulationsvorrichtung
- 9: Objekt
- 10: Sensoreinrichtung
- 11: Sensoreinrichtungsreferenzpunkt
- 12: Ist-Objektreferenzpunkt
- 12': aktualisierter Ist-Objektreferenzpunkt
- 13: prädizierter Objektreferenzpunkt
- 14: Abstrahlungscharakteristik
- 14': Signal
- 14": moduliertes Signal
- 15: prädizierter Echopunkt
- 15': Ist-Echopunkt
- 15": tatsächlicher Echopunkt
- 16: prädizierte Relativbeziehung
- 17: Empfangsmodul
- 18: Modulationsmodul
- 19: Ansteuermodul
- 20: Sendemodul
- S1-S6: erster bis sechster Arbeitsschritt
- S4': zusätzlicher vierter Arbeitsschritt

## Patentansprüche

1. Verfahren (1) zur simulationsgestützten Bestimmung wenigstens eines Ist-Echopunkts (15') eines Objekts (9), folgende Arbeitsschritteschritte aufweisend:
S1 Berechnen eines prädizierten Objektreferenzpunkts (13) des Objekts (9) und eines prädizierten Sensoreinrichtungsreferenzpunkts einer, insbesondere radarbasierten, Sensoreinrichtung (10) auf der Grundlage eines Ist-Objektreferenzpunkts (12) und eines Ist-Sensoreinrichtungsreferenzpunkts (11);
S2 Bestimmen eines prädizierten Echopunkts (15) des Objekts (9) auf der Grundlage einer Abstrahlungscharakteristik (14) der Sensoreinrichtung (10), dem prädizierten Objektreferenzpunkt (13) und dem prädizierten Sensoreinrichtungsreferenzpunkt, wobei der prädizierte Echopunkt (15) für eine vorhergesagte Situation berechnet wird;
S3 Berechnen einer prädizierten, insbesondere räumlichen, Relativbeziehung (16) zwischen dem prädizierten Echopunkt (15) und dem prädizierten Objektreferenzpunkt (13);
S4 Berechnen, insbesondere wenigstens im Wesentlichen in Echtzeit, eines aktualisierten Ist-Objektreferenzpunkts (12');
S5 Bestimmen, insbesondere wenigstens im Wesentlichen in Echtzeit, eines simulierten Ist-Echopunkts (15') des Objekts (9) auf der Grundlage der prädizierten Relativbeziehung (16) und dem aktualisierten Ist-Objektreferenzpunkt (12'), wobei der prädizierte Echopunkt (15) dem aktualisierten Ist-Objektreferenzpunkt (12') zugeordnet wird; und
S6 Ausgeben des simulierten Ist-Echopunkts (15').

2. Verfahren nach Anspruch 1, des weiteren folgenden Arbeitsschritt aufweisend:
S4' Berechnen, insbesondere wenigstens im Wesentlichen in Echtzeit, eines aktualisierten Ist-Sensoreinrichtungsreferenzpunkts; wobei der Ist-Echopunkt (15') des Weiteren auf der Grundlage des aktualisierten Ist-Sensoreinrichtungsreferenzpunkts der Sensoreinrichtung (10) bestimmt wird.

3. Verfahren nach Anspruch 1 oder 2, wobei die Arbeitsschritte des Verfahrens periodisch wiederholt werden und der Prädiktionshorizont in Arbeitsschritt S1 so weit ist, wie zum Bestimmen des prädizierten Echopunkts (15) des Objekts (9) in Arbeitsschritt S2 benötigt wird, vorzugsweise weniger als eine Sekunde, insbesondere weniger als etwa 500 ms, insbesondere weniger als etwa 200 ms, insbesondere wenigstens etwa 100 ms.

4. Verfahren nach Anspruch 1 oder 2, wobei die Arbeitsschritte des Verfahrens periodisch wiederholt werden und der Arbeitsschritt S5 nach etwa 10 ms, bevorzugt nach etwa 5 ms, besonders bevorzugt nach etwa 2 ms und am bevorzugtesten nach etwa 1 ms wiederholt wird.

5. Verfahren nach einem der vorhergehenden Ansprüche, wobei bei der Bestimmung des prädizierten Echopunkts (15) in Arbeitsschritt S2 des Weiteren eine Anordnung des Objekts (9) relativ zu der Sensoreinrichtung (10) und/oder Objektabmessungen berücksichtigt werden.

6. Verfahren zur Emulation eines Ortungsziels, die folgende Arbeitsschritte aufweisend:
- Prüfen, ob ein Signal (14'), welches von einer, insbesondere radarbasierten, Sensoreinrichtung (10) ausgesandt wird, empfangen wird;
- Bestimmen und Ausgeben wenigstens eines simulierten Ist-Echopunkts (15') gemäß einem der Ansprüche 1 bis 5, insbesondere nur dann, wenn ein Signal (14') empfangen wird;
- Modulieren eines empfangenen Signals (14') auf der Grundlage des wenigstens einen simulierten Ist-Echopunkts (15'); und
- Aussenden des modulierten Signals (14") an die Sensoreinrichtung (10).

7. Verfahren nach Anspruch 6, wobei das ausgesandte modulierte Signal (14"), insbesondere unmittelbar, auf einen Messgrößenaufnehmer der Sensoreinrichtung (10) einwirkt.

8. System (2) zur simulationsgestützten Bestimmung wenigstens eines Ist-Echopunkts (15') eines Objekts (9), aufweisend:
― Mittel (7) zum Berechnen eines prädizierten Objektreferenzpunkts (13) des Objekts (9) und eines prädizierten Sensoreinrichtungsreferenzpunkts einer, insbesondere radarbasierten, Sensoreinrichtung (10) auf der Grundlage eines Ist-Objektreferenzpunkts (12) und eines Ist-Sensoreinrichtungsreferenzpunkts (11);
― Mittel (4) zum Bestimmen eines prädizierten Echopunkts (15) des Objekts (9) auf der Grundlage einer Abstrahlungscharakteristik (14) der Sensoreinrichtung (10), dem prädizierten Objektreferenzpunkt (13) und dem prädizierten Sensoreinrichtungsreferenzpunkt, wobei der prädizierte Echopunkt (15) für eine vorhergesagte Situation berechnet wird;
― Mittel (5) zum Berechnen einer prädizierten, insbesondere räumlichen, Relativbeziehung (16) zwischen dem prädizierten Echopunkt (15) und dem prädizierten Objektreferenzpunkt (13);
― Mittel (3) zum Berechnen, insbesondere wenigstens im Wesentlichen in Echtzeit, eines aktualisierten Ist-Objektreferenzpunkts (12');
― Mittel (5) zum Bestimmen, insbesondere wenigstens im Wesentlichen in Echtzeit, eines simulierten Ist-Echopunkts (15') des Objekts (9) auf der Grundlage der prädizierten Relativbeziehung (16) und dem aktualisierten Ist-Objektreferenzpunkt (12'), wobei der prädizierte Echopunkt (15) dem aktualisierten Ist-Objektreferenzpunkt (12') zugeordnet wird; und
― Mittel (5) zum Ausgeben des simulierten Ist-Echopunkts (15').

9. Emulationsvorrichtung (8) zur Emulation eines Ortungsziels, aufweisend:
- ein Empfangsmodul (17), eingerichtet zum Empfangen eines von einer Sensoreinrichtung (10) ausgesandten Signals (14'), insbesondere Radarsignals;
- ein Rechenmodul, welches ein System (2) nach Anspruch 8 umfasst;
- ein Modulationsmodul (18), welches eingerichtet ist, ein von dem Empfangsmodul (17) empfangenes Signal (14') auf der Grundlage des wenigstens einen simulierten Ist-Echopunkts (15') zu modulieren;
- ein Ansteuermodul (19), welches eingerichtet ist, ein Ansteuersignal für eine Antenne zu generieren, insbesondere wenigstens teilweise auf der Grundlage des wenigstens einen simulierten Ist-Echopunkts (15') und/oder des modulierten Signals (14"); und
- ein Sendemodul (20), eingerichtet zum Senden des modulierten Signals (14") an die Sensoreinrichtung (10).

10. Emulationsvorrichtung nach Anspruch 9, wobei das Sendemodul (20) eingerichtet ist, insbesondere unmittelbar, auf einen Messgrößenaufnehmer der Sensoreinrichtung (10) einzuwirken.

## Claims

1. Method (1) for the simulation-based determination of at least one actual echo point (15') of an object (9), comprising the following steps:
S1 calculating a predicted object reference point (13) of the object (9) and a predicted sensor device reference point of a, in particular radar-based, sensor device (10) on the basis of an actual object reference point (12) and an actual sensor device reference point (11);
S2 determining a predicted echo point (15) of the object (9) based on a radiation characteristic (14) of the sensor device (10), the predicted object reference point (13), and the predicted sensor device reference point, wherein the predicted echo point (15) is calculated for a predicted situation;
S3 calculating a predicted, in particular spatial, relative relationship (16) between the predicted echo point (15) and the predicted object reference point (13);
S4 calculating, in particular at least substantially in real time, an updated actual object reference point (12');
S5 determining, in particular at least substantially in real time, a simulated actual echo point (15') of the object (9) based on the predicted relative relationship (16) and the updated actual object reference point (12'), the predicted echo point (15) being associated with the updated actual object reference point (12'); and
S6 Output of the simulated actual echo point (15').

2. Method according to claim 1, further comprising the following step:
S4' calculating, in particular at least substantially in real time, an updated actual sensor device reference point; wherein the actual echo point (15') is further determined based on the updated actual sensor device reference point of the sensor device (10).

3. Method according to claim 1 or 2, wherein the steps of the method are periodically repeated and the prediction horizon in step S1 is as far as needed to determine the predicted echo point (15) of the object (9) in step S2, preferably less than one second, in particular less than about 500 ms, in particular less than about 200 ms, in particular at least about 100 ms.

4. Method according to claim 1 or 2, wherein the steps of the method are periodically repeated and step S5 is repeated after about 10 ms, preferably after about 5 ms, particularly preferably after about 2 ms and most preferably after about 1 ms.

5. Method according to any one of the preceding claims, wherein an arrangement of the object (9) relative to the sensor device (10) and/or object dimensions are further taken into account when determining the predicted echo point (15) in step S2.

6. Method of emulating a locating target comprising the steps of:
― checking whether a signal (14') transmitted by a sensor device (10), in particular a radar-based sensor device, is received;
― determining and outputting at least one simulated actual echo point (15') according to any one of claims 1 to 5, in particular only when a signal (14') is received;
― modulating a received signal (14') based on the at least one simulated actual echo point (15'); and
― transmitting the modulated signal (14") to the sensor device (10).

7. Method according to claim 6, wherein the transmitted modulated signal (14") acts, in particular directly, on a transducer of the sensor device (10).

8. System (2) for simulation-based determination of at least one actual echo point (15') of an object (9), comprising:
― means (7) for calculating a predicted object reference point (13) of the object (9) and a predicted sensor device reference point of a, in particular radar-based, sensor device (10) on the basis of an actual object reference point (12) and an actual sensor device reference point (11);
― means (4) for determining a predicted echo point (15) of the object (9) based on a radiation characteristic (14) of the sensor device (10), the predicted object reference point (13) and the predicted sensor device reference point, wherein the predicted echo point (15) is calculated for a predicted situation;
― means (5) for calculating a predicted, in particular spatial, relative relationship (16) between the predicted echo point (15) and the predicted object reference point (13);
― means (3) for calculating, in particular at least substantially in real time, an updated actual object reference point (12');
― means (5) for determining, in particular at least substantially in real time, a simulated actual echo point (15') of the object (9) on the basis of the predicted relative relationship (16) and the updated actual object reference point (12'), the predicted echo point (15) being associated with the updated actual object reference point (12'); and
― means (5) for outputting the simulated actual echo point (15').

9. Emulation device (8) for emulating a locating target, comprising:
- a receiver module (17), set up to receive a signal (14'), in particular a radar signal, transmitted by a sensor device (10);
- a computing module comprising a system (2) according to claim 8;
- a modulation module (18) arranged to modulate a signal (14') received by the receiver module (17) on the basis of the at least one simulated actual echo point (15');
- a control module (19) arranged to generate a control signal for an antenna, in particular at least partly on the basis of the at least one simulated actual echo point (15') and/or the modulated signal (14"); and
- a transmitter module (20) arranged to transmit the modulated signal (14") to the sensor device (10).

10. Emulation device according to claim 9, wherein the transmitter module (20) is arranged to act, in particular directly, on a transducer of the sensor device (10).

## Revendications

1. Procédé (1) pour déterminer de manière assistée par simulation au moins un point réel d'écho (15') d'un objet (9), présentant des étapes de phases de travail qui suivent :
S1 le calcul d'un point de référence d'objet prédit (13) de l'objet (9) et d'un point de référence de dispositif capteur prédit d'un dispositif capteur (10) en particulier à base de radar sur la base d'un point de référence d'objet réel (12) et d'un point de référence de dispositif capteur réel (11) ;
S2 la détermination d'un point d'écho prédit (15) de l'objet (9) sur la base d'une caractéristique d'émission (14) du dispositif capteur (10), du point de référence d'objet prédit (13) et du point de référence de dispositif capteur prédit, dans lequel le point d'écho prédit (15) est calculé pour une situation anticipée ;
S3 le calcul d'une relation relative (16) prédite, en particulier spatiale, entre le point d'écho réel prédit (15) et le point de référence d'objet prédit (13) ;
S4 le calcul, en particulier au moins sensiblement en temps réel, d'un point de référence d'objet réel (12') mis à jour;
S5 la détermination, en particulier au moins sensiblement en temps réel, d'un point d'écho réel (15') simulé de l'objet (9) sur la base de la relation relative prédite (16) et du point de référence d'objet réel mis à jour (12'), dans lequel le point d'écho prédit (15) est associé au point de référence d'objet réel mis à jour (12') ; et
S6 l'émission du point d'écho réel (15') simulé.

2. Procédé selon la revendication 1, présentant par ailleurs l'étape de travail qui suit :
S4' le calcul en particulier au moins sensiblement en temps réel d'un point de référence de dispositif capteur réel mis à jour ; dans lequel le point d'écho réel (15') est déterminé par ailleurs sur la base du point de référence de dispositif capteur réel mis à jour du dispositif capteur (10) .

3. Procédé selon la revendication 1 ou 2, dans lequel les étapes de travail du procédé sont répétées de manière périodique et l'horizon de prédiction est aussi éloigné lors de l'étape de travail S1 que la détermination du point d'écho prédit (15) de l'objet (9) lors de l'étape de travail S2, de préférence est inférieur à une seconde, en particulier est inférieur à environ 500 ms, en particulier est inférieur à environ 200 ms, en particulier est inférieur à environ 100 ms.

4. Procédé selon la revendication 1 ou 2, dans lequel les étapes de travail du procédé sont répétées de manière périodique et l'étape de travail S5 est répétée après environ 10 ms, de manière préférée après environ 5 ms, de manière particulièrement préférée après environ 2 ms et idéalement après environ 1 ms.

5. Procédé selon l'une quelconque des revendications précédentes, dans lequel lors de la détermination du point d'écho prédit (15), un agencement de l'objet (9) par rapport au dispositif capteur (10) et/ou des dimensions d'objet sont pris en compte par ailleurs lors de l'étape de travail S2.

6. Procédé d'émulation d'une cible localisée, qui présente des étapes de travail suivantes :
- de vérification pour savoir si un signal (14'), lequel est envoyé par un dispositif capteur (10) en particulier à base de radar, est reçu ;
- de détermination et d'émission d'au moins un point d'écho réel (15') simulé selon l'une quelconque des revendications 1 à 5, en particulier seulement quand un signal (14') est reçu ;
- de modulation d'un signal (14') reçu sur la base de l'au moins un point d'écho réel (15') simulé ; et
- l'envoi du signal modulé (14'') au dispositif capteur (10) .

7. Procédé selon la revendication 6, dans lequel le signal modulé (14'') envoyé agit, en particulier directement, sur un enregistreur de grandeurs de mesure du dispositif capteur (10).

8. Système (2) de détermination assistée par simulation d'au moins un point d'écho réel (15') d'un objet (9), présentant :
- des moyens (7) pour calculer un point de référence d'objet prédit (13) de l'objet (9) et d'un point de référence de dispositif capteur prédit d'un dispositif capteur (10) en particulier à base de radar, sur la base d'un point de référence d'objet réel (12) et d'un point de référence de dispositif capteur réel (11) ;
- des moyens (4) pour déterminer un point d'écho prédit (15) de l'objet (9) sur la base d'une caractéristique d'émission (14) du dispositif capteur (10), du point de référence d'objet prédit (13) et du point de référence de dispositif capteur prédit, dans lequel le point d'écho prédit (15) est calculé pour une situation anticipée ;
- des moyens (5) pour calculer une relation relative (16) prédite, en particulier spatiale, entre le point d'écho prédit (15) et le point de référence d'objet prédit (13) ;
- des moyens (3) pour calculer, en particulier au moins sensiblement en temps réel, un point de référence d'objet réel mis à jour (12') ;
- des moyens (5) pour déterminer, en particulier au moins sensiblement en temps réel, un point d'écho réel (15') simulé de l'objet (9) sur la base d'une relation relative prédite (16) et du point de référence d'objet réel mis à jour (12'), dans lequel le point d'écho prédit (15) est associé au point de référence d'objet réel mis à jour (12') ; et
- des moyens (5) pour émettre le point écho réel (15') simulé.

9. Dispositif d'émulation (8) pour l'émulation d'une cible localisée, présentant :
- un module de réception (17) mis au point pour recevoir un signal (14') envoyé par un dispositif capteur (10), en particulier un signal radar ;
- un module de calcul, lequel comprend un système (2) selon la revendication 8 ;
- un module de modulation (18), lequel est mis au point pour moduler un signal (14') reçu par le module de réception (17) sur la base de l'au moins un point d'écho réel (15') simulé ;
- un module de pilotage (19), lequel est mis au point pour générer un signal de pilotage pour une antenne, en particulier au moins en partie sur la base de l'au moins un point d'écho réel (15') simulé et/ou du signal modulé (14") ; et
- un module d'envoi (20) mis au point pour envoyer le signal modulé (14") au dispositif capteur (10).

10. Dispositif d'émulation selon la revendication 9, dans lequel le module d'envoi (20) est mis au point pour agir en particulier directement sur un enregistreur de grandeurs de mesure du dispositif capteur (10).
